# EUROPÄISCHE PATENTSCHRIFT

(11) **EP 2 520 629 B1**
(45) Veröffentlichungstag und Bekanntmachung des Hinweises auf die Patenterteilung: **12.06.2019**
(21) Anmeldenummer: 12165338.0
(22) Anmeldetag: 24.04.2012
(51) Int. Cl.: C09J 7/21

(54) **Verfahren zur Herstellung eines Klebebandes zum Umwickeln von Kabeln aus einem offenen textilen Träger und einer darauf einseitig beschichteten Haftklebemasse**
Method for producing an adhesive tape for bundling cables cables comprising an open textile substrate and an adhesive mass coated on one side thereof
Procédé de fabrication d'une bande adhésive destinée à être enroulée autour de câbles et composée d'un support textile ouvert revêtu sur l'un de ses côtés par une masse auto-collante

(30) Priorität: 03.05.2011 DE 102011075160
(43) Veröffentlichungstag der Anmeldung: 07.11.2012
(73) Patentinhaber: tesa SE, 22848 Norderstedt (DE)
(72) Erfinder: Korthals, Brigitte Dr., 20253 Hamburg (DE); Seitzer, Dennis, 22335 Hamburg (DE); Böhm, Nicolai Dr., 22559 Hamburg (DE); Mies, Michel, 20146 Hamburg (DE); Siebert, Michael Dr., 22869 Schenefeld (DE); Guldbrandsen, Lars, 21509 Glinde (DE); Günzler, Fabian Dr., 77652 Offenburg (DE)

(56) Entgegenhaltungen:
- EP-A1- 1 852 842
- EP-A2- 2 151 484
- WO-A1-03/033611
- DE-A1- 1 569 888
- DE-A1-102009 041 898
- DE-U1-202007 008 003
- DE-U1-202010 001 353

## Beschreibung

Die Erfindung bezieht sich auf ein Verfahren zur Herstellung eines Klebebandes zum Umwickeln von Kabeln aus einem offenen textilen Träger und einer darauf einseitig beschichteten Haftklebemasse. gemäß Anspruch 1.

Seit langem finden in der Industrie Klebebänder zur Herstellung von Kabelbäumen Verwendung. Dabei dienen die Klebebänder zum Bündeln einer Vielzahl von elektrischen Leitungen vor dem Einbau oder in bereits montiertem Zustand, um den Raumbedarf des Leitungsbündels durch Bandagieren zu reduzieren sowie zusätzlich Schutzfunktionen zu erzielen.

Die Prüfung und Klassifizierung von Klebebändern für die Kabelummantelung erfolgt in der Automobilindustrie nach umfangreichen Normenwerken wie zum Beispiel der LV 312-1 "Schutzsysteme für Leitungssätze in Kraftfahrzeugen, Klebebänder; Prüfrichtlinie" (10/2009) als gemeinsame Norm der Firmen Daimler, Audi, BMW und Volkswagen oder der Ford-Spezifikation ES-XU5T-1A303-aa (Revision 09/2009) "Harness Tape Performance Specification). Im Folgenden werden diese Normen verkürzt mit LV 312 beziehungsweise mit Ford-Spezifikation bezeichnet.

Die Geräuschdämpfung, die Abriebbeständigkeit sowie die Temperaturbeständigkeit eines Klebebandes werden anhand definierter Prüfaufbauten und Prüfverfahren bestimmt, wie sie ausführlich in der LV 312 beschrieben sind.

Kabelwickelbänder sind mit Folien- und Textilträger verbreitet, die in der Regel einseitig mit unterschiedlichen Haftklebemassen beschichtet sind.

Auf handelsüblichen Kabelwickelbändern findet man Haftklebemassen auf Basis von Natur- und Synthesekautschuk und Polyacrylsäuerestern (Polyacrylaten). Wegen der chemischen Instabilität der beiden Erstgenannten herrscht in Fachkreisen Einvernehmen darüber, dass die anspruchsvollen Temperaturklassen nur mit Haftklebemassen auf Basis von Polyacrylaten zu realisieren sind.
Auf dem Markt präsent sind Kabelwickelbänder mit Haftklebemassen auf Basis von UVvernetzbaren Polyacrylaten. Diese werden mittels zum Beispiel einer Schlitzdüse als Schmelze auf den textilen Träger aufgelegt, abgekühlt und die benötigte Kohäsion durch UV-Strahlung einer bestimmten Dosis eingestellt. Durch die Zähflüssigkeit der Schmelze ist die Benetzung des textilen Trägers oft eingeschränkt und dadurch die Masseverankerung nicht immer ausreichend, so dass dann beim Abwickeln unerwünschtes partielles Umspulen der Haftklebemasse auf die Klebebandrückseite zu beobachten ist.
Grundsätzliche Alternativen wären Polyacrylate aus organischer Lösung oder aus wässriger Dispersion. Bei der Beschichtung von offenen textilen Trägern mit einer organischen Lösung zum Beispiel mit einem Kommarakel oder einem Streichmesser kommt es regelmäßig zum Durchschlagen der Beschichtungslösung mit den Viskositäten, wie sie handelsübliche Produkte aufweisen. Die dadurch ausgelösten Prozessstörungen bei der Beschichtung, die Rückseitenklebrigkeit und das erhöhte Abrollkraftniveau sind unakzeptabel.
Mit handelsüblichen Acrylatdispersionen auf offenen Textilträgern beobachtet der Experimentator das gleiche: die Dispersion schlägt von der Streichseite auf die Rückseite durch. Die Folgen sind die gleichen wie aus organischer Lösung.
Befragt man die heute bekannte Patentliteratur, erfährt man zwar, dass man Kabelwickelbänder mit Haftklebemassen aus wässriger Darreichungsform herstellen kann. An praktischen Ratschlägen hält sie hingegen wenig Hilfreiches bereit.

Die EP 1 132 927 B1 umfasst die Verwendung von Acrylatmassen in Bandagierungsbändern für Kabel. In der Beschreibung sind unter Träger auch alle textilen Träger umfasst. Es wird ausdrücklich ein Acrylatcompound erwähnt, der als wässriges System beschichtet werden kann. Die Beschreibung besagt, dass unter Compound verarbeitungsfertige Mischungen aus Polymeren mit den entsprechenden Additiven zu verstehen sind. Es fehlen jederlei Hinweise, wie die Beschichtung durchzuführen ist.

Nach EP 0 994 169 B1 ist die Vernetzung zur Erzielung ausreichender Kohäsion (hier im Sinne von Chemikalienbeständigkeit) häufig notwendig. Diese wiederum führt in der Regel zu einer Verringerung von Klebkraft und Tack. Die Lösung besteht in einem Verfahren zur Herstellung von Klebebändern durch strahlenchemische Vernetzung, die eine gute Kohäsion bei gleichbleibend hoher Klebkraft bewirkt. Es wird offenbart, dass die Klebmassen auch harzabgemischte Acrylate aus Dispersion sein können. Wie auch in EP 1 132 927 B1 werden keinerlei konkrete Hilfestellungen zur Realisierung gegeben.

Die DE 44 19 169 A1 beschreibt ein flammgeschütztes Band für die Kabelummantelung, bei dem sowohl der Träger als auch die Klebmasse Flammschutzmittel enthalten. In Beispiel 1 wird ausdrücklich eine Klebemasse aus den Rohstoffen Primal PS 83 D, Snowtack SE 380 A und Flammschutzmittel gemischt. Sogar die Verwendung eines Verdickers "zum Anheben der Viskosität" ist erwähnt. Bemerkenswert ist hier, dass ein Transferverfahren beschrieben wird. Es wird in der Offenbarung zwar von Trocknung des beschichteten Gewebes in der Hänge bei konkreten Temperaturen gesprochen, dennoch bleibt es im Sinne der Lehre des Patents eine Transferbeschichtung. Dieses Beschichtungsverfahren weist gegenüber der Direktbeschichtung eine Reihe von Nachteilen auf, die man nicht ohne Grund in Kauf nimmt. Zum einen ist die Masseverankerung bei einer Transferbeschichtung auf ein Gewebe in der Regel unzureichend. Zum anderen ist eine Transferbeschichtung ein Verfahren, das man typischerweise bei mangelnder Prozessfähigkeit des Trägers anwendet. Weiterhin ist ein Liner bei Kabelwickelbändern unüblich, hat also die Funktion eines Prozesshilfsmittels, das nur für die Herstellung gebraucht wird. Es verursacht demzufolge zusätzliche Kosten, die man normalerweise vermeiden würde. Als Lehre aus diesem Stand der Technik kann also interpretiert werden, dass sich Dispersionen nicht ohne Weiteres direkt beschichten lassen. In Beispiel 2 wird im Gegensatz zum Beispiel 1 ein Acrylat-Perlpolymerisat direkt beschichtet. Im Unterschied zu Acrylatdispersionen werden diese anstatt mit dem Verfahren der Emulsionspolymerisation mit dem der Suspensionspolymerisation hergestellt. Der Teilchendurchmesser der Perlpolymerisate ist mit ca. 0,01 bis 0,5 mm um ca. den Faktor 100 größer als der der Acrylatdispersionen (vergleiche hierzu das Chemielexikon Römpp, Stichwort Suspensionspolymerisation (Dokumentkennung RD-19-05062, Aufnahme in den Datenbestand: März 2002)). Es ist verständlich, dass sich diese Kugeln in der Größenordnung von Textilporen in diesen festsetzen und dadurch direkt beschichten lassen, ohne massiv durch das Gewebe durchzuschlagen

Die EP 2 000 516 A1 beschreibt ein Klebeband, insbesondere Kabelwickelband für den Automobilbau, mit einem bandförmigen, aus Gewebe bestehenden Träger, der mindestens auf einer Seite mit einer selbstklebenden Klebeschicht versehen ist, die aus einem Haftklebstoff besteht, wobei durch eine Anzahl von Kettfäden im Gewebe des Trägers im Bereich von 20 bis 42 je cm und eine Anzahl von Schussfäden im Gewebe des Trägers im Bereich von 10 bis 22 je cm eine Biegesteifigkeit des Trägers von nicht mehr als 6 mN/cm² eingestellt ist. Die gesamte Offenbarung zielt auf die mit diesem Gewebeaufbau verbundenen mechanischen Eigenschaften dieses Gewebes ab. Die Klebmasse ist beliebig.

Aus der EP 1 074 595 B1 ist ein Klebeband bekannt, enthaltend einen gewebten Träger aus Fäden, die wenigstens maßgeblich aus Polyesterfasern bestehen, von denen die einen sich in Längsrichtung des Bandes und die anderen sich quer dazu erstrecken, und eine Klebstoffschicht, die wenigstens eine Seite des Trägers bedeckt, wobei der Titer der Längsfäden pro Breiteneinheit des Bandes kleiner als der Titer der Querfäden pro Längeneinheit des Bandes und höchstens gleich 2.500 dtex/cm ist, dass der Träger zwischen 30 und 50 Längsfäden pro Zentimeter Breite und zwischen 18 und 27 Querfäden pro Zentimeter Länge aufweist, und die Längsfäden in Querrichtung durch den Klebstoff an ihrem Platz festgelegt sind, so dass dem Band eine Reißfestigkeit in Querrichtung von weniger als 10 N verliehen ist.

Aus der EP 1 081 202 A1 ist bekannt, dass zur Herstellung eines Klebebands unter anderem eine Acrylatdispersion auf einen textilen Träger so aufgetragen wird, dass sich eine Eintauchtiefe zwischen 10 µm und 0,5 mm in den textilen Träger einstellt.
Allerdings wird in der Offenbarung völlig offen gelassen, wie diese Eindringtiefe gezielt eingestellt werden kann. Die Viskosität des Klebers ist völlig unzureichend definiert, denn es fehlt die Angabe der Schergeschwindigkeit. Damit ist der Fachmann der Möglichkeit beraubt, die in dieser Offenbarung beschriebene Erfindung nachzuarbeiten.

Aus der DE 10 2009 041 898 A1 ist ein Klebeband bekannt, das aus einem Träger und auf mindestens einer Seite aufgebrachten Klebeschicht besteht, wobei der Träger ein Gewebe, vorzugsweise ein Polyestergewebe ist. Wesentlich ist, dass der Quotient aus auf die Länge bezogenem Titer der Querfäden und auf die Breite bezogenem Titer der Längsfäden zwischen 2,2 und 6 beträgt und der Träger ein Flächengewicht von größer oder gleich 110 g/m² aufweist. Die Fadenzahl in der Kette beträgt vorzugsweise 30 bis 60/cm, die Fadenzahl im Schuss vorzugsweise 20 bis 40/cm.

DE 15 69 888 A1 beschreibt ein Verfahren zur Herstellung von selbstklebenden Bändern oder Blättern wie Pflaster, bei dem auf eine biegsame Unterlage eine harzhaltige Mischung wässriger Kunststoffdispersionen für die Klebeschicht aufgetragen wird. Der Fokus der in der D1 gezeigten Produkte liegt auf medizinischen Anwendungen.

Der vorliegenden Erfindung liegt die Aufgabe zugrunde, ein Verfahren zur Herstellung eines Klebebandes insbesondere zum Umwickeln von Kabeln aus einem offenen textilen Träger und einer darauf einseitig beschichteten Haftklebemasse zur Verfügung zu stellen, bei dem die Haftklebemasse bei der Beschichtung nicht durchschlägt und gleichzeitig eine gute Verankerung auf dem Träger gewährleistet ist.

Gelöst wird diese Aufgabe durch ein Verfahren, wie es im Hauptanspruch niedergelegt ist. Gegenstand der Unteransprüche sind dabei vorteilhafte Weiterbildungen des Verfahrens.

Demgemäß betrifft die Erfindung ein Verfahren zur Herstellung eines Klebebandes zum Umwickeln von Kabeln aus einem textilen Träger und einer darauf einseitig beschichteten Haftklebemasse, wobei die Scherviskosität der Haftklebemasse bei einer Temperatur von 25 °C während der Beschichtung aus Dispersion 200 bis 100.000 Pa*s bei einer Schergeschwindigkeit von 10⁻²S⁻¹ und 0,1 bis 10 Pa*s bei einer Schergeschwindigkeit von 100 s⁻¹ beträgt.

Die Klebemasse ist eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Der textile Träger ist ein Gewebe, vorzugsweise ein Polyestergewebe.

Vorteilhaft und zumindest bereichsweise kann der Träger eine ein- oder beidseitig glattgeschliffene Oberfläche aufweisen, vorzugsweise jeweils eine vollflächig glattgeschliffene Oberfläche. Die glattgeschliffene Oberfläche mag gechintzt sein, wie es beispielsweise in der EP 1 448 744 A1 im Detail erläutert wird.

Des Weiteren kann der Träger zur Verdichtung in einem Walzwerk kalandert werden. Vorzugsweise laufen die beiden Walzen gegenläufig und mit der gleichen Umfangsgeschwindigkeit, so dass der Träger gepresst und verdichtet wird.
Wenn die Umfangsgeschwindigkeit der Walzen differiert, dann wird der Träger zusätzlich glattgeschliffen.

Als Ausgangsmaterialien für das Trägermaterial für das Klebeband sind insbesondere (Chemie)Fasern (Stapelfaser oder Endlosfilament) aus synthetischen Polymeren, auch synthetische Fasern genannt, aus Polyester, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Trägers eingesetzt werden.
Des Weiteren sind Garne, gefertigt aus den angegebenen Fasern, ebenfalls geeignet.

Bei Geweben können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.
Die Kettfäden und/oder die Schussfäden können dabei jeweils nur aus synthetischen Fäden oder nur aus Fäden aus natürlichen Rohstoffen bestehen, also sortenrein sein.

Das Gewebe weist die folgenden Merkmale auf:
- Anzahl der Kettfäden im Bereich von 30 bis 60 je cm,
- Anzahl der Schussfäden im Bereich 23 bis 50 je cm,
- Garnfeinheit in Kettrichtung von 40 bis 180 dtex und/oder
- Garnfeinheit in Schussrichtung von 100 bis 400 dtex

Der Schusseintrag ist als Einfach- und/oder Mehrfachschuss möglich.

Die Ausführung des Gewebes ist in Leinwand-, Köper- oder Atlasbindung möglich.

Das Gewebe ist vorzugsweise bei Temperaturen im Bereich von 80 bis 250 °C und unter hohem Druck (größer/gleich 400 bar, vorzugsweise 450 bar, beziehungsweise mit 170 N/mm) kalandert, so dass eine Verdichtung der Oberfläche eintritt. Die Luftdurchlässigkeit wird durch diese Maßnahme unter einen Wert von 200l/m²*s nach DIN EN ISO 9237 (200 Pa Differenzdruck bei technischen Flächengebilden, 20 cm² Prüffläche) abgesenkt. Besonders bevorzugt werden Gewebekonstruktionen, die Werte unterhalb von 130 l/m²*s ermöglichen.
Allgemein liegt die Luftdurchlässigkeit des Gewebeträgers gemäß einer besonders bevorzugten Ausführungsform der Erfindung unter einem Wert von 200 l/m²*s nach DIN EN ISO 9237 (200 Pa Differenzdruck bei technischen Flächengebilden, 20 cm² Prüffläche), besonders bevorzugt unterhalb von 130 l/m²*s.

Bei Gewebekonstruktionen mit höherer Luftdurchlässigkeit bietet sich zur Verbesserung der Beschichtbarkeit zudem der Auftrag einer Imprägnierung, die vorzugsweise als wässrige Dispersion aufgebracht wird, an.

Das Gewebe ist vorzugsweise schwarz, wobei die Garne (Filamente) spinndüsengefärbt sind.

Mit den oben genannten Parametern wird mindestens eine vollflächige Benetzung des textilen Trägers, zumeist sogar ein Einsinken der Klebmasse erreicht, ohne nennenswert durchzuschlagen. Da ein Teil der beschichteten Masse in die Poren des Textilträgers eindringt, entspricht der tatsächliche Klebmasseauftrag nicht dem effektiv für die Verklebung zur Verfügung stehenden. Als effektiver, also für die Verklebung zur Verfügung stehender Klebmasseauftrag wird derjenige angesehen, der sich oberhalb der Gewebeebene der mit Klebmasse bestrichenen Seite befindet. Damit wird eine sichere Masseverankerung erreicht und negative Effekte wie erhöhte Abrollkraft oder Störungen im Beschichtungsprozess durch durchgeschlagene Klebmasse zugleich vermieden.

Ist der effektive Masseauftrag geringer als der tatsächliche, kann ein unerwarteter, aber zumeist geschätzter Effekt auftreten, der die Verarbeitung des Klebebandes bei der Kabelummantelung erleichtert: das Klebeband wird seitlich von Hand einreißbar, weil durch die in der Textilstruktur befindliche Klebmasse die Kett- und Schussfäden des Gewebes gegen Verrutschen fixiert sind. Bei unbehandelten Geweben sorgt genau dieses Verrutschen beim Einreißversuch für eine steigende Zähigkeit, die die Handeinreißbarkeit stark erschwert, wenn nicht gar unmöglich macht. Bevorzugt sind dafür Gewebe mit einer Garnfeinheit von kleiner 90 dtex.

Die Haftklebemasse besteht aus einer wässrigen Acrylatdispersion, also einem in Wasser fein dispergierten Polyacrylsäureester mit Haftklebeeigenschaften, wie sie zum Beispiel im Handbook of Pressure Sensitive Technology von D. Satas beschrieben sind. Acrylathaftklebemassen sind typischerweise radikalisch polymerisierte Copolymere aus Acrylsäurealkylestern oder Methacrylsäurealkylestern von C₁- bis C₂₀-Alkoholen wie zum Beispiel Methylacrylat, Ethyl(meth)acrylat, n-Butyl(meth)acrylat, t-Butyl(meth)acrylat, Cyclohexyl(meth)acrylat, 2-Ethylhexyl(meth)acrylat, n-Octyl(meth)acrylat, iso-Octyl(meth)acrylat, n-Decyl(meth)acrylat, n-Dodecyl(meth)acrylat, Tetradecyl(meth)acrylat, Lauryl(meth)acrylat, Oleyl(meth)acrylat, Palmityl(meth)acrylat und Stearyl(meth)acrylat neben weiteren (Meth)acrylsäureestern wie lsobornyl(meth)acrylat, Benzyl(meth)acrylat, Phenyl(meth)acrylat und 2-Bromoethyl(meth)acrylat, Alkoxyalkyl(meth)acrylate wie Ethoxyethyl(meth)acrylat. Weiterhin fallen darunter Ester von ethylenisch ungesättigten Di- und Tricarbonsäuren und Anhydriden wie Ethylmaleat, Dimethylfumarat und Ethylmethylitaconat. Ebenfalls fallen vinylaromatische Monomere wie zum Beispiel Styrol, Vinyltoluol, Methylstyrol, n-Butylstyrol, Decylstyrol darunter.
Weitere mögliche Monomere zur Erzielung der vorteilhaften Eigenschaften sind Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Nitrile wie Acrylnitril oder Methacrylnitril, Säureamide wie Acrylamid oder Methacrylamid und ungesättigte Kohlenwasserstoffe mit 2 bis 8 Kohlenstoffatomen wie Ethylen, Propen, Butadien, Isopren, 1-Hexen oder 1-Octen.
Zur Beeinflussung der physikalischen und optischen Eigenschaften der Haftklebemasse kommen mehrfunktionale ethylenisch ungesättigte Monomere als Vernetzermonomere in Frage. Beispiele hierzu sind Divinylbenzol, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat. Unter die Gruppe der mehrfunktionellen Monomere fallen auch UV-vernetzbare Monomere wie zum Beispiel mit (Meth)acrylat-funktionalisierte Derivate des Benzophenons oder des Benzoins.
Eine weitere Gruppe von Monomeren sind solche, die ein latentes Vernetzungspotential im Polymer erzeugen und nach dem Eintrocknen der Klebemasse spontan (häufig katalysiert) zu einem Netzwerkaufbau führen. Ein solches Monomer ist zum Beispiel Glycidymethyacrylat, dessen Oxiranring mit Hydroxyl- oder insbesondere Carboxylatfunktionen unter Ringöffnung zu einer kovalenten Bindung führt. Diese Reaktion findet beschleunigt in Gegenwart von Zinkionen oder, besonders in Anwesenheit von Carboxylfunktionen, Aminen statt.
Zur Erzielung haftklebriger Eigenschaften muss die Verarbeitungstemperatur der Klebmasse oberhalb ihrer Glasübergangstemperatur sein, um viskoelastische Eigenschaften zu haben.

Typische Teilchengrößen des dispergierten Polymers reichen von 20 nm bis zu 10 µm. Die Polymerdispersion wird hergestellt durch das Verfahren der Emulsionspolymerisation von Acrylat- und eventuell weiteren ethylenisch ungesättigten Monomeren. Beschreibungen dieses Verfahrens werden zum Beispiel gegeben in "Emulsion Polymerization and Emulsion Polymers" - Peter A. Lovell and Mohamed S. EI-Aasser - Wiley-VCH 1997 - ISBN 0-471-96746-7 oder in EP 1 378 527 B1.

Die Scherviskositäten von kommerziellen Dispersionen liegen in der Regel unter denen des erfindungsgemäßen Verfahrens. Zur Erzielung der notwendigen Scherviskositäten werden im Regelfall Rheologieadditive, auch Verdicker genannt, eingesetzt. Grundsätzlich unterscheidet man hier zwischen organischen und anorganischen Rheologieadditiven.
Die organischen Verdicker spalten sich wiederum in zwei wesentliche Wirkprinzipien auf: (a) die Verdickung der wässrigen Phase, also nicht assoziierend, und (b) Assoziatbildung zwischen Verdickermolekül und Partikeln, zum Teil unter Einbeziehung der Stabilisatoren (Emulgatoren).
Vertreter der ersten Stoffgruppe sind wasserlösliche Polyacrylsäuren und Polycoacrylsäuren, die im basischen Medium Polyelektrolyte mit großem hydrodynamischem Volumen bilden. Der Fachmann bezeichnet diese auch kurz als ASE (alkali swellable emulsion). Sie zeichnen sich durch hohe Ruhescherviskositäten und starke Scherverdünnung aus. Eine andere Stoffklasse sind die modifizierten Polysaccharide, insbesondere Celluloseether wie Carboxymethylcellulose, 2-Hydroxyethylcellulose, Carboxymethyl-2-hydroxyethylcellulose, Methylcellulose, 2-Hydroxyethylmethylcellulose, 2-Hydroxyethylethylcellulose, 2-Hydroxypropylcellulose, 2-Hydroxypropylmethylcellulose, 2-Hydroxybutylmethylcellulose. Zusätzlich zählen zu dieser Stoffklasse weniger verbreitete Polysaccharide wie Stärkederivate und spezielle Polyether.
Die Wirkgruppe der Assoziativverdicker sind im Prinzip Blockcopolymere mit einem wasserlöslichen Mittelblock und hydrophoben Endblöcken, wobei die Endblöcke mit den Partikeln oder sich selbst wechselwirken und dadurch ein Raumnetz unter Einbeziehung der Partikel bilden. Typische Vertreter sind dem Fachmann als HASE (hydrophobically modified alkali swellable emulsion), HEUR (hydrophobically modified ethyleneoxide urethane) oder HMHEC (hydrophobically modified hydroxyethyl cellulose) geläufig. Bei den HASE-Verdickern ist der Mittelblock ein ASE, die Endblöcke sind zumeist über Polyethylenoxidbrücken angekoppelte lange, hydrophobe Alkylketten. Bei den HEUR ist der wasserlösliche Mittelblock ein Polyurethan, beim HMHEC eine 2-Hydroxyethylcellulose.
Besonders die nicht-ionischen HEUR und HMHEC sind weitgehend pH unempfindlich. Je nach Struktur bewirken die Assoziativverdicker mehr oder weniger ein newtonsches (scherratenunabhängiges) oder pseudoplastisches (scherverflüssigendes) Fließverhalten. Mitunter zeigen sie auch einen thixotropen Charakter, das heißt, sie zeigen neben einer Scherkraftabhängigkeit der Viskosität auch eine Zeitabhängigkeit.

Die anorganischen Verdicker sind zumeist Schichtsilikate natürlichen oder synthetischen Ursprungs, Beispiele sind Hektorite und Smektite. Im Kontakt mit Wasser lösen sich die einzelnen Schichten voneinander. Durch unterschiedliche Ladungen an Flächen und Rändern der Plättchen bilden sie in Ruhe eine raumerfüllende Kartenhausstruktur aus, woraus hohe Ruhescherviskositäten bis hin zu Fließgrenzen resultieren. Bei Scherung bricht die Kartenhausstruktur zusammen und es ist ein deutlicher Abfall der Scherviskosität zu beobachten. Je nach Ladung, Konzentration und geometrischen Dimensionen der Plättchen kann der Strukturaufbau einige Zeit in Anspruch nehmen, so dass mit solchen anorganischen Verdickern auch Thixotropie erzielt werden kann.

Die Verdicker lassen sich teilweise direkt in die Klebstoffdispersion einrühren oder werden teilweise zuvor vorteilhaft in Wasser vorverdünnt beziehungsweise vordispergiert. Typische Einsatzkonzentrationen sind 0,1 bis 5 Gew.-% bezogen auf die Feststoffe.

Anbieter von Verdickern sind zum Beispiel OMG Borchers, Omya, Byk Chemie, Dow Chemical Company, Evonik, Rockwood oder Münzing Chemie.

Die Acrylatdispersion kann zur Verbesserung der Klebeeigenschaften mit Klebrigmachern abgemischt sein.
Als Klebrigmacher, auch als Klebharze bezeichnet, sind prinzipiell alle bekannten Stoffklassen geeignet. Klebrigmacher sind beispielsweise Kohlenwasserstoffharze (zum Beispiel Polymere auf Basis ungesättigter C₅-oder C₉-Monomere), Terpenphenolharze, Polyterpenharze auf Basis von Rohstoffen wie zum Beispiel α- oder ß-Pinen, aromatische Harze wie Cumaron-Inden-Harze oder Harze auf Basis Styrol oder α-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze. Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009). Die Harze werden zweckmäßigerweise in Dispersionsform eingesetzt. Sie lassen sich so problemlos mit der Polymerdispersion feinverteilt mischen.
Typische Einsatzmengen sind 10 bis 100 Gewichtsteile bezogen auf die Feststoffe.

Zur weiteren Verbesserung der Kabelverträglichkeit kann die Klebmasseformulierung optional mit Lichtschutz- oder primären und/oder sekundären Alterungsschutzmitteln abgemischt sein.
Als Alterungsschutzmittel können Produkte auf Basis sterisch gehinderter Phenole, Phosphite, Thiosynergisten, sterisch gehinderter Amine oder UV-Absorber eingesetzt werden.
Bevorzugt eingesetzt werden primäre Antioxidantien wie zum Beispiel Irganox 1010 oder Irganox 254, allein oder in Kombination mit sekundären Antioxidantien wie zum Beispiel Irgafos TNPP oder Irgafos 168.

Die Alterungsschutzmittel können dabei in beliebiger Kombination miteinander verwendet werden, wobei Mischungen aus primären und sekundären Antioxidantien in Kombination mit Lichtschutzmitteln wie zum Beispiel Tinuvin 213 besonders gute Alterungsschutzwirkung zeigen.

Ganz besonders vorteilhaft haben sich Alterungsschutzmittel erwiesen, in denen ein primäres Antioxidans mit einem sekundären Antioxidans in einem Molekül vereint ist. Bei diesen Alterungsschutzmitteln handelt es sich um Kresolderivate, deren aromatischer Ring an zwei beliebigen unterschiedlichen Stellen, bevorzugt in ortho- und meta-Stellung zur OH-Gruppe mit Thioalkylketten substituiert ist, wobei das Schwefelaton auch über eine oder mehrere Alkylketten an dem aromatischen Ring des Kresolbausteins verbunden sein kann. Die Anzahl der Kohlenstoffatome zwischen dem Aromaten und dem Schwefelatom kann zwischen 1 und 10, bevorzugt zwischen 1 und 4 liegen. Die Anzahl der Kohlenstoffatome der Alkylseitenkette kann zwischen 1 und 25, bevorzugt zwischen 6 und 16 liegen. Besonders bevorzugt sind hierbei Verbindungen des Typs 4,6-Bis(dodecylthiomethyl)-o-cresol, 4,6-Bis(undecylthiomethyl)-o-cresol, 4,6-Bis(decylthiomethyl)-o-cresol 4,6-Bis(nonylthiomethyl)-o-cresol oder 4,6-Bis(octylthiomethyl)-o-cresol. Derartige Alterungsschutzmittel werden zum Beispiel von der Firm Ciba Geigy unter dem Namen Irganox 1726 oder Irganox 1520 angeboten.

Die Menge des zugesetzten Alterungsschutzmittels bzw. Alterungsschutzmittelpaketes sollte in einem Bereich zwischen 0,1 und 10 Gew.-%, bevorzugt in einem Bereich zwischen 0,2 und 5 Gew.-%, besonders bevorzugt in einem Bereich zwischen 0,5 und 3 Gew.-% bezogen auf den Gesamtfeststoffgehalt liegen.

Bevorzugt ist die Darreichungsform in Form einer Dispersion zur besonders einfachen Mischbarkeit mit der Klebmassedispersion. Alternativ können flüssige Alterungsschutzmittel auch direkt in die Dispersion eingearbeitet werden, wobei sich an den Einarbeitungsschritt noch eine Standzeit über einige Stunden anschließen sollte, um die homogene Verteilung in der Dispersion oder die Aufnahme des Alterungsschutzmittels in die Dispersionspartikel zu ermöglichen. Eine weitere Alternative ist die Zugabe einer organischen Lösung der Alterungsschutzmittel in die Dispersion. Geeignete Konzentrationen liegen im Bereich von 0,1 bis zu 5 Gewichtsteilen bezogen auf die Feststoffe.

Zur Verbesserung der Verarbeitungseigenschaften kann die Klebmasseformulierung weiterhin mit üblichen Prozesshilfsmitteln wie, Entschäumern, Entlüftern, Netzmitteln oder Verlaufsmitteln abgemischt sein. Geeignete Konzentrationen liegen im Bereich von 0,1 bis zu 5 Gewichtsteilen bezogen auf die Feststoffe.

Füllstoffe (verstärkend oder nicht verstärkend) wie Siliciumdioxide (sphärisch, nadelförmig, plättchenförmig oder unregelmäßig wie die pyrogenen Silicas), Glas als Voll- oder Hohlkugeln, Mikroballons, Kalziumcarbonate, Zinkoxide, Titandioxide, Aluminiumoxide oder Aluminiumoxidhydroxide können sowohl der Justierung der Verarbeitbarkeit als auch der klebtechnischen Eigenschaften dienen. Geeignete Konzentrationen liegen im Bereich von 0,1 bis zu 20 Gewichtsteilen bezogen auf die Feststoffe.

Das erfindungsgemäße Verfahren zur Herstellung des Klebebandes zur Ummantelung von Kabeln umfasst auch die Beschichtung des Textilträgers direkt mit der Dispersion in einem oder mehreren nacheinander durchgeführten Arbeitsgängen. Das Verfahren sieht eine Direktbeschichtung des Trägers vor. Als Auftragsverfahren kommen dem Fachmann geläufige infrage wie Drahtrakel (Meyer-Bar), Streichbalken, Kommarakel, Streichmesser mit V-Profil oder Rundprofil, Glattwalzen- oder Rasterwalzenauftrag, Düsenbeschichtung, Doppelkammerrakel oder Mehrfachkaskadendüse.
Die Trocknung kann in Kanaltrocknern, oder in der Hänge mit heißer Luft oder IR-Strahlern erfolgen, wobei diese Aufzählung nicht einschränkend wirken soll. Dem Fachmann sind weitere solcher Verfahren geläufig, ohne diese im Detail hier aufzuführen.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien.
Bevorzugt wird ein nicht-fusselndes Material eingesetzt wie eine Kunststofffolie oder ein gut verleimtes, langfaseriges Papier.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann in Form einer Rolle, also in Form einer archimedischen Spirale auf sich selbst aufgerollt, hergestellt werden.
Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv wirkende Stoffe ausgerüstet sein.

Die Klebemasse kann in Längsrichtung des Klebebands in Form eines Streifens aufgebracht sein, der eine geringere Breite aufweist als der Träger des Klebebands.
Je nach Verwendungsfall können auch mehrere parallele Streifen des Klebers auf dem Trägermaterial beschichtet sein.
Die Lage des Streifens auf dem Träger ist frei wählbar, wobei eine Anordnung direkt an einer der Kanten des Trägers bevorzugt wird.
Bevorzugt ist die Klebemasse vollflächig auf dem Träger aufgetragen.

Auf der Klebebeschichtung des Trägers kann zumindest ein Streifen einer Eindeckung vorgesehen sein, der oder die sich in Längsrichtung des Klebebands erstrecken und der oder die zwischen 20 % und 90 % der Klebebeschichtung abdecken.
Bevorzugt deckt der Streifen insgesamt zwischen 50 % und 80 % der Klebebeschichtung ab. Der Abdeckungsgrad ist gewählt in Abhängigkeit von der Anwendung und von dem Durchmesser des Kabelsatzes.
Die angegebenen Prozentzahlen beziehen sich auf die Breite der Streifen der Eindeckung in Bezug auf die Breite des Trägers.

Gemäß einer bevorzugten Ausführungsform der Erfindung ist genau ein Streifen der Eindeckung auf der Klebebeschichtung vorhanden.

Die Lage des Streifens auf der Klebebeschichtung ist frei wählbar, wobei eine Anordnung direkt an einer der Längskanten des Trägers bevorzugt wird. Auf diese Weise ergibt sich ein in Längsrichtung des Klebebands erstreckender Klebestreifen, der mit der anderen Längskante des Trägers abschließt.
Wird das Klebeband zur Ummantelung eines Kabelbaums eingesetzt, indem das Klebeband in einer schraubenlinienförmigen Bewegung um den Kabelbaum geführt wird, kann die Umhüllung des Kabelbaums so erfolgen, dass die Klebemasse des Klebebands nur auf dem Klebeband selbst verklebt wird, während das Gut mit keinem Kleber in Berührung kommt.
Der so ummantelte Kabelbaum weist aufgrund der fehlenden Fixierung der Kabel durch irgendeinen Kleber eine sehr hohe Flexibilität auf. Damit ist seine Biegefähigkeit beim Einbau - gerade auch in engen Durchgängen oder scharfen Abbiegungen - deutlich erhöht.

Falls eine gewisse Fixierung des Klebebands auf dem Gut gewünscht wird, kann die Ummantelung derartig erfolgen, dass der Klebestreifen zu einem Teil auf dem Klebeband selbst und zu einem anderen Teil auf dem Gut verklebt wird.

Gemäß einer anderen vorteilhaften Ausführungsform ist der Streifen mittig auf der Klebebeschichtung aufgebracht, so dass sich zwei an den Längskanten des Trägers in Längsrichtung des Klebebands erstreckende Klebestreifen ergeben.
Für das sichere und wirtschaftliche Aufbringen des Klebebands in besagter schraubenlinienförmiger Bewegung um den Kabelbaum und gegen das Verrutschen der sich ergebenden Schutzumhüllung sind die zwei jeweils an den Längskanten des Klebebands vorhandenen Klebestreifen vorteilhaft, insbesondere wenn einer, der meist schmaler als der zweite Streifen ist, als Fixierungshilfe dient und der zweite, breitere Streifen als Verschluss dient. Auf diese Weise ist das Klebeband so auf dem Kabel verklebt, dass der Kabelsatz gegen Verrutschen gesichert und dennoch flexibel gestaltet ist.

Daneben gibt es Ausführungsformen, bei denen mehr als ein Streifen der Eindeckung auf der Klebebeschichtung aufgebracht sind. Wenn lediglich von einem Streifen die Rede ist, liest der Fachmann in Gedanken mit, dass durchaus auch mehrere Streifen gleichzeitig die Klebebeschichtung eindecken können.

Das mit dem erfindungsgemäßen Verfahren erzeugte Klebeband eignet sich wegen der Klebmassebasis aus Acrylat hervorragend für das Umwickeln von Kabeln auch für die hohen Temperaturklassen T3 und T4. Das Abwickeln gelingt leicht, weil keine Klebmasse beim Beschichten auf die Rückseite gelangt ist, zugleich ist die Klebmasse so fest verankert, dass es zu keinen Umspulungen kommt. Unter gewissen Randbedingungen des Gewebes ist es von Hand leicht einreißbar und erleichtert die Verarbeitung bei Herstellen von Kabelsätzen durch Entbehrlichkeit von Werkzeugen für das Ablängen. Eine solche erleichterte Handeinreißbarkeit wird vor allem durch die Wahl eines feinen Kettfadens unter 90 dtex Stärke erzielt. Um beim Reißvorgang ein Aufeinanderschieben der Kettfäden zu vermeiden, ist eine ausreichende Fixierung der einzelnen Garne des Gewebes, zum Beispiel durch einen Spannrahmenprozess bei hohen Temperaturen, unerlässlich. Eine weitere Fixierung kann durch eine Beschichtung/Imprägnierung mit wässrigen Dispersionen, die aufgrund von Kapillareffekten tief in die Gewebezwischenräume und in das Garn selbst, das heißt zwischen die einzelnen Filamente, eindringen können, erzielt werden. Durch die Kombination aus konventioneller Fixierung im Spannrahmen und Beschichtung mit wässriger Dispersion wird eine optimierte Handeinreißbarkeit erreicht. Als Beispiel dient in diesem Zusammenhang ein Gewebe mit der Konstruktion von 34 Fäden/cm mit 84 dtex Stärke in Kettrichtung und 28 Fäden/cm mit 167 dtex in Schussrichtung. Dieses Gewebe ist nach Fixierung im Spannrahmen nicht optimal handeinreißbar und weist nach der etablierten Methode AFERA 4007 eine Weiterreißfestigkeit von 8 bis 10 N auf. Durch die Beschichtung mit einer Acrylatdispersion kann dieser Wert auf ein Niveau von 4 bis 6 N gesenkt werden, was sich in einer sehr guten Einreißbarkeit widerspiegelt.

Des Weiteren ist es vorteilhaft zum Ummanteln von langgestrecktem Gut wie insbesondere Kabelsätze in Kraftfahrzeugen geeignet, wobei das Klebeband in einer Schraubenlinie um das langgestreckte Gut geführt oder das langgestreckte Gut in axialer Richtung von dem Band umhüllt werden kann.

Aufgrund der hervorragenden Eignung des Klebebandes kann es in einer Ummantelung Verwendung finden, die aus einer Eindeckung besteht, bei der zumindest in einem Kantenbereich der Eindeckung das selbstklebend ausgerüstete Klebeband vorhanden ist, das so auf der Eindeckung verklebt ist, dass sich das Klebeband über eine der Längskanten der Eindeckung erstreckt, und zwar vorzugsweise in einem im Vergleich zur Breite der Eindeckung schmalen Kantenbereich.
Ein derartiges Produkt sowie optimierte Ausführungsformen desselben werden in der EP 1 312 097 A1 offenbart. In der EP 1 300 452 A2, der DE 102 29 527 A1 sowie der WO 2006 108 871 A1 werden Weiterentwicklungen dargestellt, für die das erfindungsgemäße Klebeband ebenfalls sehr gut geeignet ist. Ebenso kann das erfindungsgemäße Klebeband in einem Verfahren Verwendung finden, wie es die EP 1 367 608 A2 offenbart.
Schließlich beschreiben die EP 1 315 781 A1 sowie die DE 103 29 994 A1 Ausführungsformen von Klebebändern, wie sie auch für das erfindungsgemäße Klebeband möglich sind.

Im Folgenden soll das Klebeband anhand einer Figur näher erläutert werden, ohne damit eine wie auch immer geartete Einschränkung hervorrufen zu wollen.

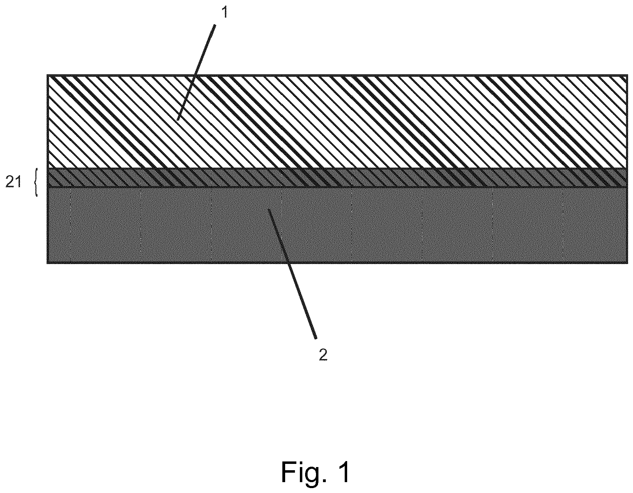

Es zeigen
- Figur 1: das nach dem erfindungsgemäßen Verfahren hergestellte Klebeband im seitlichen Schnitt.

In der Figur 1 ist im Schnitt in Querrichtung (Querschnitt) das Klebeband gezeigt, das aus einem Gewebeträger 1 besteht, auf den einseitig eine Schicht einer selbstklebenden Beschichtung 2 auf Basis einer Acrylatdispersion aufgebracht ist.
Die Klebemasse ist zu 20 % in den Träger eingesunken, was eine optimale Verankerung bewirkt und gleichzeitig die Handeinreißbarkeit des Trägers verbessert.

### Beispiele

Zur Erläuterung der Erfindung wurde das Verfahren nach folgendem Schema durchgeführt:

### Beschichtung

Die Beschichtung erfolgte an einer Laborbeschichtungsanlage mit einer Bahnbreite von 30 cm. Die wesentlichen funktionellen Komponenten dieser Anlage sind die Abwicklung des unbeschichteten Trägerballens, das Auftragswerk für die Klebemasse zur Erzielung einer definierten Nassfilmdicke, ein Schwebedüsen-Kanaltrockner mit vier 5 m langen, einzeln temperierbaren Temperaturzonen und ein Wickler für die Aufwicklung des beschichteten und getrockneten Produktes.
Als Auftragswerk diente ein Streichmesser mit V-Profil, das radial oberhalb einem im Gleichlauf mit der Bahn rotierenden Streichzylinder angeordnet war, über den der Träger geführt wurde (Knife-over-roll-Verfahren). Der Abstand zwischen zu beschichtendem Gewebe und der Unterkante des Streichmessers wurde so justiert, dass nach der Trocknung das gewünschte Flächengewicht der Haftklebemasse gemäß den Beispielen resultierte.
Als Variante stand ein Auftragswerk mit der Technik eines Luftrakels zur Verfügung. Im Unterschied zum Knife-over-roll-Verfahren fällt hier der Streichzylinder weg. Das Streichmesser wird auf Kontakt mit dem Träger gefahren, so dass der Nassauftrag durch die Bahnspannung geregelt wird.

Die Trocknerzonen wurden wie folgt temperiert:
Zone 1: 80 °C, Zone 2: 80 °C, Zone 3: 90 °C, Zone 4: 110 °C.
Die Bahngeschwindigkeit betrug 4 m/min.

Der aufgewickelte, mit Klebmasse beschichtete und getrocknete Ballen wurde an einer Konfektioniermaschine per Scherenschnitt zu Rollen von 25 m Länge und 20 mm Breite auf 1,5 Zoll-Pappkernen konfektioniert.

Als Beispielträger wurden zwei schwarz eingefärbte Polyestergewebe herangezogen:
Gewebe 1:
   Feinheit der Garne 167 dtex, Fadenzahl Kette 48,5 1/cm, Fadenzahl Schuss 23 1/cm. Eine Kalandrierung erfolgte bei 100 °C und bei einem Druck von 200 N/mm im Walzenspalt beziehungsweise 478 bar.
   Die Luftdurchlässigkeit liegt unter 180 l/m²*s.
Gewebe 2:
   Feinheit des Kettfadens 84 dtex, Fadenzahl Kette 34 1/cm,
   Feinheit des Schussfadens 167 dtex, Fadenzahl Schuss 28 1/cm;
   Eine Kalandrierung erfolgte bei 220 °C und 230 N/mm Druck im Walzenspalt beziehungsweise 550 bar.
Gewebe 3:
   Wie Gewebe 2, in Abweichung dazu erfolgte eine Kalandrierung bei 100 °C und einem Druck von 200 N/mm im Walzenspalt beziehungsweise 478 bar.

Als handelsübliche Haftklebstoffdispersion wurde eine Acrylatdispersion mit 69 % Feststoffgehalt verwendet (Acronal V215 von BASF).

Als handelsübliche Verdicker wurden herangezogen:

| **Bezeichnung** | **Hersteller** | **Typ** | **Charakteristik** |
|---|---|---|---|
| Acrysol TT615 ER | Dow | HASE | stark pseudoplastisch |
| Acrysol RM-12W | Dow | HEUR | stark pseudoplastisch |
| Borchigel 0625 | OMG Borchers | HEUR | pseudoplastisch |
| Tafigel PUR 41 | Münzing Chemie | HEUR | pseudoplastisch |

Die Verdicker wurden vor dem Einmischen in die Acrylatdispersion mit destilliertem Wasser im Verhältnis 1:1 verdünnt (womit sich der Feststoffgehalt halbiert), um deren homogene Einarbeitung in die Acrylatdispersion zu verbessern. Zur Einarbeitung wurde die Acrylatdispersion in Lieferform mit einem Ankerrührer mit 200 rpm gerührt und in die Trombe der vorverdünnte Verdicker gegeben. Zur Homogenisierung wurde nach Zugabe weitere 10 Minuten gerührt. Vor der Beschichtung wurde die Masse 24 Stunden zur Entlüftung stehen gelassen.

### Bestimmung der Scherviskosität

Die Scherviskosität wurde mit einem Rheometer mit Kegel-Platte Geometrie (DSR 200 N von Rheometric Scientific) bei 25 °C gemessen. Es wurde ein Schubspannungssweep von 0,1 bis 4700 Pa mit 10 Messpunkten pro Dekade abgefahren.

### Beurteilungskriterien

Die Kriterien zur Beurteilung auf ein anwendungsgerechtes Verfahren sind:
- Masseverankerung auf dem Träger beim Abrollen
- Abrollkraft

### Durchführung der Tests

Die Tests wurden an Rollen von 25 m Länge und 20 mm Breite durchgeführt, die zuvor über 14 Tage bei 40 °C gelagert worden waren, um die Testaussagen deutlicher hervorzuheben.

### Masseverankerung auf dem Träger beim Abrollen

Die Masseverankerung auf dem Träger ist dann anwendungsgerecht, wenn beim Abrollen keinerlei Umspulen der Haftklebemasse auf die Klebebandrückseite zu beobachten ist. Dazu wird die Rolle mit Geschwindigkeiten von 0,3 m/min und 30 m/min abgewickelt und die Trägerrückseite, also die der Klebemasse abgewandte Seite visuell auf Klebemasserückstände begutachtet. Klebmasserückstände heben sich vom schwarzen Gewebe sehr deutlich sichtbar ab.

Das Ergebnis "keine Klebmasserückstände" ist anwendungsgerecht und wird mit der Note "1" bewertet. Jegliche erkennbaren Klebmasserückstände bekommen die Note "0".

### Abrollkraft

Bei ungeeigneter Abstimmung von Viskosität der Klebmassedispersion und Gewebekonstruktion kann die Klebmassedispersion beim Beschichtungsprozess durch den Träger durchschlagen, so dass Klebmasse auch auf die Trägerrückseite, also die der Klebemasse abgewandten Seite, gerät. Da es beim Aufwickeln der Klebebandrolle zu einem Klebmasse-Klebmassekontakt kommt, steigt die Klebkraft spürbar an und gerät rasch über ein tolerierbares Maß hinaus. Das tolerierbare Maß gibt die Automobilnorm LV312 vor, nach der die Abrollkraft einer Klebebandrolle für die Kabelummantelung bei einer Abzugsgeschwindigkeit von 30 m/min zwischen 3 und 9 N/cm liegen soll.

Liegt der Wert in diesem Intervall, bedeutet das ein vernachlässigbares Durchschlagen der Klebemasse und wird mit der Note "1" bewertet. Werte oberhalb dieses Intervalls erhalten die Note "0+".

Bei massivem Durchschlagen der Klebemasse ist ein Abrollen per Hand kaum noch möglich. Es kommt dann zu regelrechter Verblockung der Rolle, zum Teil spult die Klebemasse auf die Rückseite um. Bei diesem Fehler wird die Abrollkraft mit "0-" gekennzeichnet.

Für ein bestandenes anwendungstechnisches Urteil müssen beide Kriterien mit "1" benotet sein.

In Tabelle 1 sind die Rezepturen der Dispersionsklebemasseformulierungen aufgeführt. Die Zahlen geben dabei den Verdickergehalt in Prozent bezogen auf die Feststoffe an.

**Tabelle 1**

| | Formulierung | | | | |
|---|---|---|---|---|---|
| Verdickerbezeichnung | 1 | 2 | 3 | 4 | 5 |
| Acrysol TT 615 ER | 0,16 | - | - | - | - |
| Acrysol RM-12W | - | 0,16 | - | - | - |
| Borchigel 0625 | - | - | 0,20 | - | - |
| Tafigel PUR 41 | - | - | - | - | 0,05 |

In Tabelle 2 sind die Scherviskositäten in Pa*s der Beispielformulierungen 1 bis 5 bei Schergeschwindigkeiten von 0,01 s⁻¹ und 100 s⁻¹ angegeben.

**Tabelle 2**

| | Scherviskositäten der Formulierung in Pa*s | | | | |
|---|---|---|---|---|---|
| Schergeschwindigkeit | 1 | 2 | 3 | 4 | 5 |
| 0,01 s⁻¹ | 3000 | 1000 | 500 | 40 | 80 |
| 100 s⁻¹ | 3 | 1,5 | 4 | 0,5 | 2 |

Nach dem oben beschriebenen Beschichtungsverfahren wurden auf den Geweben 1 und 2 mit den Klebmasseformulierungen 1 bis 5 die in Tabelle 3 zusammengestellten Klebebandkonstruktionen als Beispiele und Vergleichsbeispiele hergestellt:

**Tabelle 3**

| | Formulierung | | | | | |
|---|---|---|---|---|---|---|
| | 1 | 1 | 2 | 3 | 4 | 5 |
| Gewebe 1 | Beispiel B1 | Beispiel B2* | Beispiel B3 | Beispiel B4 | Vergleichsbeispiel V1 | Vergleichsbeispiel V2 |
| Gewebe 2 | Vergleichsbeispiel V3 | | | | | |
| Gewebe 3 | Vergleichsbeispiel V4 | | | | | |

| | | | | | | |
|---|---|---|---|---|---|---|
| * In der Herstellweise von den anderen abweichend, Erläuterung im Text. | | | | | | |

Bei allen Beispielen und Vergleichsbeispielen mit Ausnahme von Beispiel B2 wurde der Beschichtungsspalt so einjustiert, dass nach dem Trocknen ein Flächengewicht der Beschichtung von 100 g/m² mit einer Toleranz von ±3 g/m² resultierte.

Bei Beispiel B2 wurde eine zweischrittige Prozessvariante angewendet: In einem ersten Schritt wurde mit dem Luftrakelauftragswerk ein Flächengewicht der getrockneten Klebemasse von ca. 20 g/m² auf das Gewebe aufgebracht. Das Gewebe zeigte nach diesem Beschichtungsschritt keine Klebrigkeit. Der effektive Masseauftrag war also null, die gesamte Klebmasse war im Träger versunken.

Im zweiten Schritt wurde das vorbeschichtete Gewebe mit dem Knife-over-roll-Verfahren mit weiteren ca. 80 g/m² Klebemasse beschichtetet, so dass nach dem Trocknen ein Gesamtflächengewicht der Beschichtung von 100 g/m² mit einer Toleranz von ±3 g/m² resultierte.

Tabelle 4 zeigt die Ergebnisse der Ausprüfungen auf die Kriterien "Masseverankerung auf dem Träger beim Abrollen" und "Abrollkraft".

**Tabelle 4**

| | Beispiele | | | | Vergleichsbeispiele | | | |
|---|---|---|---|---|---|---|---|---|
| | B1 | B2 | B3 | B4 | V1 | V2 | V3 | V4 |
| Masseverankerung auf dem Träger beim Abrollen | 1 | 1 | 1 | 1 | 1 | 1 | 1 | 1 |
| Abrollkraft | 1 | 1 | 1 | 1 | 0+ | 0+ | 0+ | 0- |

Nur bei den Klebebändern mit Gewebeträger, die mit dem erfindungsgemäßen Verfahren hergestellt wurden, lassen sich beide Schlüsselkriterien für ein funktionierendes Klebeband realisieren. Die Vergleichsbeispiele sind dagegen untauglich. Bei den Vergleichsbeispielen 1 bis 3 zeigt sich gegenüber Vergleichsbeispiel 4 der günstige Effekt einer Kalandrierung.
Allerdings nicht allein die Kalandrierung führt zur gewünschten Beschichtbarkeit des Trägers, es handelt sich um ein Zusammenspiel aus Kalandrierung und Gewebekonstruktion.
Dünnere beziehungsweise Gewebekonstruktionen verlangen deshalb eine intensivere Kalandrierung als dicke geschlossene Träger.

## Patentansprüche

1. Verfahren zur Herstellung eines Kabelbandagierungsbandes, in dem ein textiler Träger einseitig mit einer Haftklebemasse beschichtet wird, wobei
die Klebemasse eine wässrige Acrylatdispersion ist,
die Scherviskosität der Haftklebemasse bei einer Temperatur von 25 °C während der Beschichtung aus Dispersion 200 bis 100.000 Pa*s bei einer Schergeschwindigkeit von 10⁻²s⁻¹ und 0,1 bis 10 Pa*s bei einer Schergeschwindigkeit von 100 s⁻¹ beträgt,
der Haftklebemasse Rheologieadditive in Form von Assoziatiwerdickern zugesetzt sind, wobei die Einsatzkonzentration der Assoziativverdicker zwischen 0,1 bis 5 Gew.-% bezogen auf die Feststoffe liegt,
und wobei
der textile Träger ein Gewebe ist, das die folgenden Merkmale aufweist:
• Anzahl der Kettfäden im Bereich von 30 bis 60 je cm,
• Anzahl der Schussfäden im Bereich 23 bis 50 je cm,
• Garnfeinheit in Kettrichtung von 40 bis 180 dtex und/oder
• Garnfeinheit in Schussrichtung von 100 bis 400 dtex

2. Verfahren nach Anspruch 1,
**dadurch gekennzeichnet, dass**
der textile Träger ein Polyestergewebe ist.

3. Verfahren nach zumindest einem der Ansprüche 1 bis 2,
**dadurch gekennzeichnet, dass**
der textile Träger ein Gewebe ist, das bei Temperaturen im Bereich von 80 bis 250 °C und unter einem Druck größer/gleich 400 bar, vorzugsweise 450 bar, beziehungsweise mit 170 N/mm kalandert ist.

4. Verfahren nach zumindest einem der vorherigen Ansprüche,
**dadurch gekennzeichnet, dass**
der textile Träger ein Gewebe ist, wobei die Luftdurchlässigkeit unter einem Wert von 200 l/m²*s nach DIN EN ISO 9237 (200 Pa Differenzdruck bei technischen Flächengebilden, 20 cm² Prüffläche), bevorzugt unterhalb von 130 l/m²*s liegt.

5. Verfahren nach Anspruch 1,
**dadurch gekennzeichnet, dass**
die Acrylatdispersion durch das Verfahren der Emulsionspolymerisation hergestellt wird.

6. Verfahren nach zumindest einem der vorherigen Ansprüche,
**dadurch gekennzeichnet, dass**
als Klebrigmacher Klebharze mit einem Erweichungspunkt oberhalb von 80 °C gemäß ASTM E28-99 (2009), bevorzugt Harze auf Basis von Terpenphenolen und/oder Kolophoniumestern mit einem Erweichungspunkt oberhalb von 90 °C gemäß ASTM E28-99 (2009) eingesetzt werden.

## Claims

1. Method for producing a cable bandaging tape in which a textile carrier is coated on one side with a pressure-sensitive adhesive, where
the adhesive is an aqueous acrylate dispersion,
the shear viscosity of the pressure-sensitive adhesive at a temperature of 25°C during coating from dispersion is 200 to 100 000 Pa*s at a shear rate of 10⁻² s⁻¹ and 0.1 to 10 Pa*s at a shear rate of 100 s⁻¹, rheological additives in the form of associative thickeners are added to the pressure-sensitive adhesive, where the use concentration of the associative thickeners is between 0.1% and 5% by weight, based on the solids,
and where
the textile carrier is a woven fabric which has the following features:
• number of warp threads in the range from 30 to 60 per cm,
• number of weft threads in the range from 23 to 50 per cm,
• linear yarn density in warp direction from 40 to 180 dtex and/or
• linear yarn density in weft direction from 100 to 400 dtex.

2. Method according to Claim 1,
**characterized in that**
the textile carrier is a woven polyester fabric.

3. Method according to at least one of Claims 1 and 2, **characterized in that**
the textile carrier is a woven fabric which is calendered at temperatures in the range from 80 to 250°C and under a pressure of greater than or equal to 400 bar, preferably 450 bar, or at 170 N/mm.

4. Method according to at least one of the preceding claims,
**characterized in that**
the textile carrier is a woven fabric, the air permeability being below a value of 200 l/m²*s according to DIN EN ISO 9237 (200 Pa differential pressure for technical sheetlike structures, 20 cm² test area), preferably below 130 /m²*s.

5. Method according to Claim 1,
**characterized in that**
the acrylate dispersion is prepared by the process of emulsion polymerization.

6. Method according to at least one of the preceding claims,
**characterized in that**
tackifiers used are tackifier resins having a softening point of more than 80°C according to ASTM E28-99 (2009), preferably resins based on terpene phenols and/or rosin esters with a softening point of more than 90°C according to ASTM E28-99 (2009).

## Revendications

1. Procédé de fabrication d'une bande de bandage de câble, selon lequel un support textile est revêtu d'un côté avec une masse adhésive sensible à la pression,
la masse adhésive étant une dispersion aqueuse d'acrylate,
la viscosité sous cisaillement de la masse adhésive sensible à la pression à une température de 25 °C pendant le revêtement à partir de la dispersion étant de 200 à 100 000 Pa*s à une vitesse de cisaillement de 10⁻² s⁻¹ et de 0,1 à 10 Pa*s à une vitesse de cisaillement de 100 s⁻¹,
des additifs de rhéologie sous la forme d'épaississants associatifs étant ajoutés à la masse adhésive sensible à la pression, la concentration de charge des épaississants associatifs étant comprise entre 0,1 et 5 % en poids, par rapport aux solides,
et
le support textile étant un tissu qui présente les caractéristiques suivantes :
- le nombre de fils de chaîne se situe dans la plage allant de 30 à 60 par cm,
- le nombre de fils de trame se situe dans la plage allant de 23 à 50 par cm,
- le titre du fil dans la direction de la chaîne est de 40 à 180 dtex et/ou
- le titre du fil dans la direction de la trame est de 100 à 400 dtex.

2. Procédé selon la revendication 1, **caractérisé en ce que** le support textile est un tissu de polyester.

3. Procédé selon au moins l'une quelconque des revendications 1 et 2, **caractérisé en ce que** le support textile est un tissu qui est calandré à des températures dans la plage allant de 80 à 250 °C et sous une pression supérieure ou égale à 400 bar, de préférence 450 bar, ou à 170 N/mm.

4. Procédé selon au moins l'une quelconque des revendications précédentes, **caractérisé en ce que** le support textile est un tissu, la perméabilité à l'air étant inférieure à une valeur de 200 1/m²*s selon DIN EN ISO 9237 (pression différentielle de 200 Pa pour des structures plates techniques, surface d'essai de 20 cm²), de préférence inférieure à 130 1/m²*s.

5. Procédé selon la revendication 1, **caractérisé en ce que** la dispersion d'acrylate est fabriquée par le procédé de polymérisation en émulsion.

6. Procédé selon au moins l'une quelconque des revendications précédentes, **caractérisé en ce que** des résines adhésives ayant un point de ramollissement supérieur à 80 °C selon ASTM E28-99 (2009), de préférence des résines à base de terpène-phénols et/ou d'esters de colophane ayant un point de ramollissement supérieur à 90 °C selon ASTM E28-99 (2009), sont utilisées en tant qu'agents collants.
